# EUROPEAN PATENT SPECIFICATION

(11) **EP 2 741 473 B1**
(45) Date of publication and mention of the grant of the patent: **06.07.2016**
(21) Application number: 13789149.5
(22) Date of filing: 08.04.2013
(51) Int. Cl.: H04L 29/08, H04W 88/18, H04M 1/725

(54) **HUMAN-MACHINE INTERACTION DATA PROCESSING METHOD AND APPARATUS**
DATENVERARBEITUNGSVERFAHREN UND VORRICHTUNG MIT MENSCH-MASCHINE-INTERAKTION
PROCÉDÉ ET APPAREIL DE TRAITEMENT DE DONNÉES D'INTERACTION HOMME-MACHINE

(30) Priority: 25.09.2012 CN 201210361466
(43) Date of publication of application: 11.06.2014
(73) Proprietor: Huawei Technologies Co., Ltd., Longgang District Shenzhen, Guangdong 518129 (CN)
(72) Inventor: WANG, Liangwei, Shenzhen, Guangdong 518129 (CN); ZHANG, Gong, Shenzhen, Guangdong 518129 (CN)
(74) Representative: Kreuz, Georg Maria
(86) International application number: PCT/CN2013/073884
(87) International publication number: WO 2014/048105

(56) References cited:
- CN-A- 101 374 280
- CN-A- 101 782 768
- CN-A- 102 075 851
- CN-A- 102 223 609
- CN-A- 102 438 038
- CN-A- 102 591 696
- THEUS HOSSMANN ET AL: "Collecting big datasets of human activity one checkin at a time", PROCEEDINGS OF THE 4TH ACM INTERNATIONAL WORKSHOP ON HOT TOPICS IN PLANET-SCALE MEASUREMENT, HOTPLANET '12, 25 June 2012 (2012-06-25), page 15, XP055134490, New York, New York, USA DOI: 10.1145/2307836.2307842 ISBN: 978-1-45-031318-6
- NICHOLAS D LANE ET AL: "Exploiting Social Networks for Large-Scale Human Behavior Modeling", IEEE PERVASIVE COMPUTING, IEEE SERVICE CENTER, LOS ALAMITOS, CA, US, vol. 10, no. 4, 31 December 2011 (2011-12-31), pages 45-53, XP011385672, ISSN: 1536-1268, DOI: 10.1109/MPRV.2011.70
- REZA RAWASSIZADEH ET AL: "UbiqLog", PERSONAL AND UBIQUITOUS COMPUTING, SPRINGER VERLAG, LONDON, GB, vol. 17, no. 4, 3 April 2012 (2012-04-03), pages 621-637, XP058014561, ISSN: 1617-4909, DOI: 10.1007/S00779-012-0511-8

## Description

### TECHNICAL FIELD

Embodiments of the present invention relate to communications technologies, and in particular, to a man-machine interaction data processing method and apparatus.

### BACKGROUND

With the continuous enhancement of functions of user terminals, the use of user terminals is more and more closely related to users' daily life. The study and application of sensing and predicting an action or activity of a user, or even an intention of the user by using a user terminal are emerging.

In order to recognize the action and activity of the user, a large amount of sensor data in the user terminal needs to be used and the sensor data collected by the user terminal needs to be matched with the action and activity of the user. In the prior art, a manner generally used for collecting sensor data is to recruit volunteers. A volunteer may provide sensor data on a user terminal carried by the volunteer, and the volunteer also needs to actively provide an action and activity thereof corresponding to the sensor data, for example, provide video data or audio data as a basis for matching the sensor data. When performing specific matching, an operator needs to match different actions and activities with sensor data by checking the video data or audio data, thereby annotating the sensor data.

However, the prior art is limited by the number of recruited volunteers and the enthusiasm of the volunteers for participating, and cannot ensure a large amount of sensor data. A volunteer needs to perform a complicated operation, and the operator needs to perform subsequent processing that is complicated and time-consuming.

THEUS HOSSMANN ET AL: "Collecting big datasets of human activity one checkin at a time", PROCEEDINGS OF THE 4TH ACM INTERNATIONAL WORKSHOP ON HOT TOPICS IN PLANET-SCALE MEASUREMENT, HOTPLANET '12,25 June 2012, page 15, XP055134490, New York, New York, USA DOL:10.1145/2307836.2307842 ISBN:978-1-45-031318-6 discloses a mobile app (called "up2") letting users check in to their current activ-ity (e.g, "waiting for the bus", "riding a bicycle", "having dinner"). After a checkin, up2 uses the phone's sensors to gather data about the user's activity and surrounding, thus sensor data labelled with the respective activity of the user is collected at the side of the mobile phone, then sensor data labelled with the respective activity of the user is uploaded from the mobile phone to a server, where datasets of mobile phone sensor data labelled with human activities are stored in the server for querying or retrieving. NICHOLAS D LANE ET AL: "Exploting Social Networks for large-scale Human Behavior Modeling", IEEE PERVASIVE COMPUTING, IEEE SERVICE CENTER, LOS ALAMITOS, CA, US, vol. 10, no. 4,31 December 2011, pages 45-53, XP011385672, ISSN: 1536-1268, DOI: 10.1109/MPRV.2011.70 discloses manually collecting and annotating sensor data at the user side, in particular, in order to get the everyday activities datasets, an experiment over 19 days with 20 people is performed, each people carrying one Smartphone sampling from sensors, and the participants are asked to label their own data on the phones directly or later during an office Web-based data-collection phase; in order to get the significant places datasets, an experiment over 12 days with 13 participants is performed, the participants are asked to carry the mobile phones that capture data from the sensors, and the participants are asked to label the times when they find themselves in locations they consider to be personally significant, entering this information directly on the phones as the ground truth.

REZA RAWASSIZADEH ET AL: "UbiqLog", PERSONAL AND UBIQUITOUS COMPUTING, SPRINGER VERLAG, LONDON, GB, vol. 17, no. 4, 3 April 2012, pages 621-637, XP058014561, ISSN: 1617-4909, DOI: 10.1007/S00779-012-0511-8 discloses in the implementation of the UbiqLog framework, that sensors do not reside separately from the phone and their data will be stored on user's mobile phones. In particular, the metadata extraction component in the architecture will be used to annotate data in order to make them searchable and browsable.

### SUMMARY

The invention is defined in independent claims 1 and 4.

Embodiments of the present invention provide a man-machine interaction data processing method and apparatus to overcome the problems that the prior art is limited by the number of recruited volunteers and the enthusiasm of the volunteers for participating and cannot ensure a large amount of sensor data, and that a volunteer and an operator need to perform a complicated and time-consuming operation.

An embodiment of the present invention provides a man-machine interaction data processing method, the method is performed by a server, including:
receiving data collection information sent by a user terminal, where the data collection information includes identification information, sensor data and data collection time information of the user terminal;
obtaining application service content information corresponding to the identification information and the data collection time information, and extracting a user activity behavior feature from the application service content information; and
annotating the sensor data according to the user activity behavior feature of the user terminal;
the obtaining application service content information corresponding to the identification information and the data collection time information includes:
   obtaining service content information of an application used by the user terminal corresponding to the identification information in a time period corresponding to the data collection time information; wherein the data collection time information identifies a time period in which the sensor data is collected;
the extracting a user activity behavior feature from the application service content information includes:
   extracting the user activity behavior feature from at least one category of information of link information and image information in the service content information of the application used by the user terminal.

Furthermore, in the man-machine interaction data processing method, the annotating the sensor data according to the user activity behavior feature of the user terminal includes: classifying the user activity behavior feature of the user terminal; and
annotating the sensor data by using the classified user activity behavior feature.

Furthermore, in the man-machine interaction data processing method, the application includes:
at least one application of a social sharing application, and an online comment application. An embodiment of the present invention provides a server, including:
   a sensor data receiving module, configured to receive data collection information sent by a user terminal, where the data collection information includes identification information, sensor data, and data collection time information of the user terminal;
   an application service obtaining module, configured to obtain application service content information corresponding to the identification information and the data collection time information, and extract a user activity behavior feature from the application service content information; and
   an annotating module, configured to annotate the sensor data according to the user activity behavior feature of the user terminal; the application service obtaining module includes: a service content obtaining unit, configured to obtain service content information of an application used by the user terminal corresponding to the identification information in a time period corresponding to the data collection time information; wherein the data collection time information identifies a time period in which the sensor data is collected; and
   a feature extracting unit, configured to extract the user activity behavior feature from at least one category of information of link information and image information in the service content information of the application used by the user terminal.

Furthermore, in the server, the annotating module includes:
a feature classifying unit, configured to classify the user activity behavior feature of the user terminal; and
an annotating unit, configured to annotate the sensor data by using the classified user activity behavior feature.

Furthermore, in the server, the application includes:
at least one application of a social sharing application and an online comment application.

With the man-machine interaction data processing method and apparatus according to the embodiments of the present invention, data collection information sent by a user terminal is received; application service content information corresponding to identification information and data collection time information is obtained; a user activity behavior feature is extracted from the application service content information; and then sensor data is annotated according to the user activity behavior feature of the user terminal. This achieves effective collection of sensor data and ensures that the sensor data is matched with corresponding activity content of a user. Because the method according to the embodiments may be used to collect sensor data of each user, a user is not required to actively cooperate and a large amount of sensor data is ensured so that subsequent processing becomes more convenient and accurate.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of Embodiment 1 of a man-machine interaction data processing method according to the present invention;
FIG. 2 is a flowchart of Embodiment 2 of a man-machine interaction data processing method according to the present invention;
FIG. 3 is a schematic structural diagram of Embodiment 1 of a server according to the present invention;
FIG. 4 is a schematic structural diagram of Embodiment 2 of a server according to the present invention; and
FIG. 5 is a schematic structural diagram of Embodiment 3 of a server according to the present invention.

### DESCRIPTION OF EMBODIMENTS

To make the objectives, technical solutions, and advantages of the embodiments of the present invention more comprehensible, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

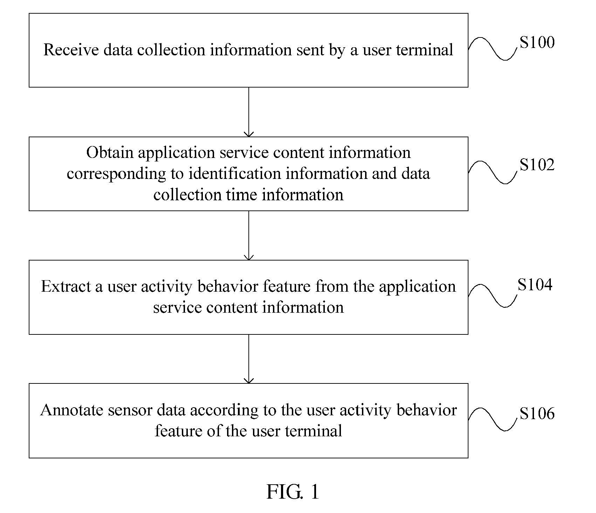

FIG. 1 is a flowchart of Embodiment 1 of a man-machine interaction data processing method according to the present invention. As shown in FIG. 1, the method according to the embodiment may include:
Step 100: Receive data collection information sent by a user terminal.

Specifically, a server may receive data collection information sent by a user terminal, where the data collection information includes identification information, sensor data, and data collection time information of the user terminal.

For example, the identification information of the user terminal may be information that may uniquely identify a user, such as a mobile phone number, a microblog account, and a social network account of the user.

The sensor data may include, for example, location data generated according to a cellular base station positioning technology, location data generated by a GPS(global positioning system), and all categories of sensor data collected by acceleration, angle, light, and sound sensors.

The data collection time information identifies a time point at which or a time period in which a segment of data is collected.

Preferably, the server may store the data collection information in a sensor database in the server, and store the identification information and the data collection time information in an activity-associated information database of the server.

Step 102: Obtain application service content information corresponding to the identification information and the data collection time information.

Specifically, the server may extract application service content information that is published by the same user in the same time period by using a mobile terminal. For example, when a user sends a message "I am walking" on a microblog by using a smart mobile terminal, the server will obtain information corresponding to the microblog account of the user, time when the user sends the message "I am walking", and content information "I am walking" of the application service. Therefore, according to different identification information and data collection time information of different users, the server may extract application service content information published by a large number of users.

Step 104: Extract a user activity behavior feature from the application service content information.

Specifically, the server may extract a user activity behavior feature from the application service content information. The purpose is to match the application service content information of the same user in the same time period with the sensor data, where the corresponding user activity behavior feature may be extracted according to different application service content information. For example, after the content information "I am walking" of the application service is obtained, "walking" is extracted therefrom as a user activity behavior feature. The user activity behavior feature is stored into an activity behavior feature database on the server.

Step 106: Annotate the sensor data according to the user activity behavior feature of the user terminal.

Specifically, the server may correspond the sensor data in a time period to the user activity behavior feature in the same time period. For example, the extracted user activity behavior feature "walking" is matched, according to the identification information and the data collection time information of the user terminal, with the corresponding sensor data, for example, the user location data, acceleration data, and the like, which is collected by a sensor on the user terminal; the matched sensor data is annotated; and the annotated user activity behavior feature is stored into an activity annotation database. For example, the sensor data corresponding to the "walking" mentioned above is annotated with a category "Sport".

In the embodiment, data collection information sent by a user terminal is received; application service content information corresponding to identification information and data collection time information is obtained; a user activity behavior feature is extracted from the application service content information; and then sensor data is annotated according to the user activity behavior feature of the user terminal. This achieves effective collection of sensor data and ensures that the sensor data is matched with corresponding activity content of a user. Because the method according to the embodiment may be used to collect sensor data of each user, which avoids requiring a user to actively cooperate, sensor data of a large number of users may be collected at the same time, thereby ensuring a large amount of sensor data so that subsequent processing becomes more convenient and accurate.

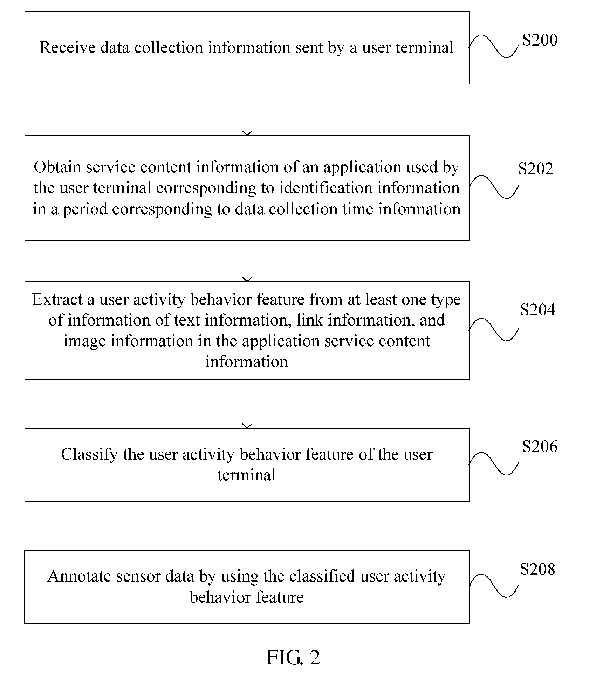

Based on Embodiment 1 of the man-machine interaction data processing method according to the present invention, furthermore, FIG. 2 is a flowchart of Embodiment 2 of a man-machine interaction data processing method according to the present invention. As shown in FIG. 2, the method according to the embodiment may include:
Step 200: Receive data collection information sent by a user terminal.

Specifically, the function and principle of step 200 are described in detail in step 100 of Embodiment 1 of the man-machine interaction data processing method according to the present invention, and will not be described herein again.

Step 202: Obtain service content information of an application used by the user terminal corresponding to the identification information in a time period corresponding to the data collection time information.

Specifically, for different activities of a user, sensor data collected by a sensor on the user terminal is different. For example, acceleration data collected by a sensor when a user is running is obviously different from acceleration data when the user is reading. In order to distinguish sensor data corresponding to different activities of the user, in the method according to the embodiment, an application service obtaining module in the server obtains service content information of an application used by the user terminal corresponding to the identification information in the time period corresponding to the data collection time information. This is significant because when a user performs an activity, the sensor data may be matched with the application service content information published by the user by using a mobile terminal in the same time period. For example, when a user is running, a sensor on the mobile terminal of the user obtains a group of corresponding acceleration data; meanwhile, in the time period, the user publishes application service content "I am running" on a microblog by using the mobile terminal. In this case, the server obtains the application service content information of "I am running". Therefore, according to different identification information and data collection time information of different users, the server may extract application service content information published by a large number of users.

Step 204: Extract a user activity behavior feature from at least one category of information of text information, link information, and image information in the application service content information. Specifically, with respect to text information, an event and action word of the text information may be extracted based on a semi-structured analysis method. That is, unnecessary field information in a webpage format is removed, and useful content, for example, a feature such as a location, a service name, a score, and a social relationship, is extracted. For example, a user publishes "I am running" on a microblog by using a mobile terminal; and "running" is extracted by the server. With respect to link information published by a user, a website corresponding to the link information may be distinguished according to a uniform resource locator (Uniform Resource Locator, URL for short) of the link information. For example, the website is distinguished as a sport club website, a movie website, and the like. Furthermore, the server may open the website and extract a corresponding user activity behavior feature from text information in the website by using an extracting method based on text content. With respect to an image published by a user, a corresponding user activity behavior feature may be extracted according to text content attached to the image; or a person and location in the image may be recognized according to a related image recognition technology, thereby extracting a corresponding user activity behavior feature.

With respect to the user activity behavior feature extracted from at least on category of information of the text information, link information, and image information in the application service content information, optionally, the server stores the user activity behavior feature into an activity behavior feature database.

Step 206: Classify the user activity behavior feature of the user terminal.

Specifically, because the application service content information published by users by using a mobile terminal is different, the user activity behavior features extracted by the server are different. However, multiple user activity behavior features may be classified. Optionally, with respect to a classification method, the server may classify user activity behavior features by using a classification algorithm such as a decision tree, a Bayes classification algorithm, an SVM classifier, a maximum entropy classifier, and a KNN classification algorithm, and then use a clustering method based on a latent variable matrix, similar images, and the like, to generate a clustering result with respect to the user activity behavior feature, thereby completing the whole classification processing. After extracting a large number of user activity behavior features of a large number of users, the server may classify and cluster the different user activity behavior features of the different users according to the classification algorithms and clustering algorithms. Active participation of volunteers as required in the prior art is not needed. The large number of user activity behavior features collected by using the method according to the embodiment of the present invention ensures the accuracy and particularity for classification and clustering. It should be noted that the embodiment of the present invention has no limitation on the classification algorithm and the clustering algorithm, and different classification and clustering algorithms may be stored into a classification processing model database on the server.

Step 208: Annotate sensor data by using the classified user activity behavior feature.

Specifically, the classified user activity behavior feature needs to be annotated. Optionally, the classified user activity behavior feature may be annotated by an operator. For example, user activity behavior features classified into the same category are respectively "running", "swimming", and "walking"; in this case, the operator may define this category of user activity behavior feature as "sport". Alternatively, a knowledge repository may be set up, and the same category of user activity behavior features is compared with categories in the knowledge repository; the same type of user activity behavior feature is summarized by using a superordinate concept, and this category of user activity behavior feature is annotated with the summarized category. For example, user activity behavior features classified into the same category are respectively "hot pot", "noodle", and "barbecue"; in this case, these user activity behavior features are compared with category names in the knowledge repository, and finally the server performs summarization according to a comparison result of the knowledge repository by using a superordinate concept, and annotates this category of user activity behavior features as "meal". In this way, different categories of application service content information published by users are summarized and classified into a large category. In this case, because of the user activity behavior feature and the identification information and the data collection time information of the same user terminal, in fact, annotating the user activity behavior feature is equivalent to annotating the corresponding sensor data. Furthermore, the annotated sensor data may be stored into an activity annotation database.

It should be noted that the application includes at least one application of a social sharing application, a check-in application, an online comment application, and a life log application.

In the embodiment, service content information of an application used by a user terminal corresponding to identification information in a time period corresponding to data collection time information is obtained; a user activity behavior feature is extracted from at least one category of information of text information, link information, and image information in the application service content information; a user activity behavior feature of the user terminal is classified; and sensor data is annotated by using the classified user activity behavior feature. This achieves accurate matching of the user sensor data with the corresponding user activity behavior feature. Because the method according to the embodiment may be used to collect sensor data of each user, which avoids requiring a user to actively cooperate, sensor data of a large number of users may be collected at the same time, thereby ensuring a large amount of sensor data, so that subsequent processing becomes more convenient and accurate.

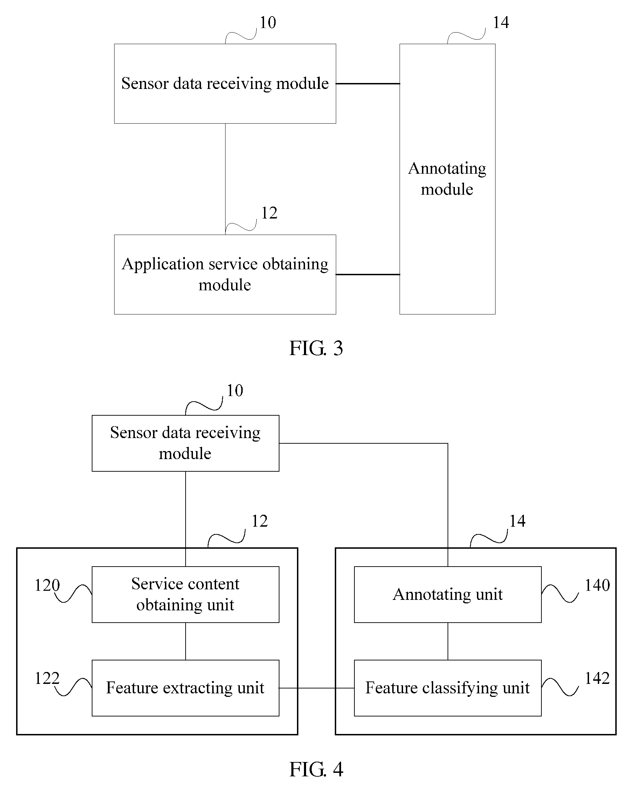

FIG. 3 is a structural diagram of Embodiment 1 of a server according to the present invention. As shown in FIG. 3, the server according to the embodiment may include a sensor data receiving module 10, an application service obtaining module 12, and an annotating module 14.

The sensor data receiving module 10 is configured to receive data collection information sent by a user terminal, where the data collection information includes identification information, sensor data, and data collection time information of the user terminal.

Specifically, the sensor data receiving module 10 receives sensor data collected by various sensors on a mobile terminal of a user, identification information and data collection time information of the user terminal, may store the data collection information in a sensor database, and store the identification information and the data collection time information into an activity-associated information database of the server.

The application service obtaining module 12 is configured to obtain application service content information corresponding to the identification information and the data collection time information, and extract a user activity behavior feature from the application service content information. Specifically, the application service obtaining module 12 obtains the identification information and the data collection time information of the user from the activity-associated information database, and obtains the application service content information corresponding to the identification information and the data collection time information of the user from a network at the same time. Because there is a lot of useless information in the application service content published by the user by using the mobile terminal, for example, text information published on a webpage has an inherent format field of the webpage, which is insignificant for specific activity content of the user, the user activity behavior feature in the application service content needs to be extracted. For example, in "I am watching a movie", "I am" has no specific meaning; therefore, when the application service obtaining module 12 extracts the user activity behavior feature, "watching a movie" is extracted as the user activity behavior feature of the application service content. Definitely, with respect to complex application service content, a location, a service name, a score, a social relationship, and the like, may be extracted at the same time. Then, the application service obtaining module 12 stores the extracted user activity behavior feature into the activity behavior feature database in the server.

The annotating module 14 is configured to annotate the sensor data according to the user activity behavior feature of the user terminal.

Specifically, the annotating module 14 corresponds the sensor data in a time period to the user activity behavior feature in the same time period by adding an annotation. The specific principle and method are described in detail in Embodiment 1 of the man-machine interaction data processing method according to the present invention, and will not be described herein again.

The server according to the embodiment may be used to implement the technical solution of the first man-machine interaction data processing method of the present invention, where the implementation principle and technical effect thereof are similar, and will not be described herein again.

On the basis of FIG. 3, FIG. 4 is a schematic structural diagram of Embodiment 2 of a server according to the present invention. As shown in FIG. 4, the application service obtaining module 12 includes a service content obtaining unit 120 and a feature extracting unit 122.

The service content obtaining unit 120 is configured to obtain service content information of an application used by the user terminal corresponding to the identification information in a time period corresponding to the data collection time information.

Specifically, the service content obtaining unit 120 obtains the identification information and the data collection time information of the user from the activity-associated information database of Embodiment 1 of the server according to the present invention, and obtains the application service content information corresponding to the identification information and the data collection time information of the user from a network at the same time.

The feature extracting unit 122 is configured to extract the user activity behavior feature from at least one category of information of text information, link information, and image information in the application service content information.

Specifically, the method and principle of the feature extracting unit 122 to extract the user activity behavior feature are described in detail in the second man-machine interaction data processing method of the present invention, and will not be described herein again.

As shown in FIG. 4, the annotating module 14 includes a feature classifying unit 140 and an annotating unit 142.

The feature classifying unit 140 is configured to classify the user activity behavior feature of the user terminal.

Specifically, the feature classifying unit 140 classifies and clusters the user activity behavior feature according to various classification and clustering processing algorithms. The various optional classification and clustering processing algorithms are stored into a classification model database of the server. The specific classification processing method and process are described in detail in Embodiment 2 of the man-machine interaction data processing method according to the present invention, and will not be described herein again.

The annotating unit 142 is configured to annotate the sensor data by using the classified user activity behavior feature.

Optionally, an operator annotates the classified user activity behavior feature by using the annotating module 14 of the server, or the annotating module 14 cooperates with a knowledge repository that is preset in the server to annotate the user activity behavior feature, thereby annotating the sensor data. The specific method and process are described in detail in Embodiment 2 of the man-machine interaction data processing method according to the present invention, and will not be described herein again.

Furthermore, the application includes at least one application of a social sharing application, a check-in application, an online comment application, and a life log application.

The server according to the embodiment may be used to implement the technical solution of Embodiment 2 of the man-machine interaction data processing method according to the present invention, where the implementation principle and technical effect thereof are similar, and will not be described again herein.

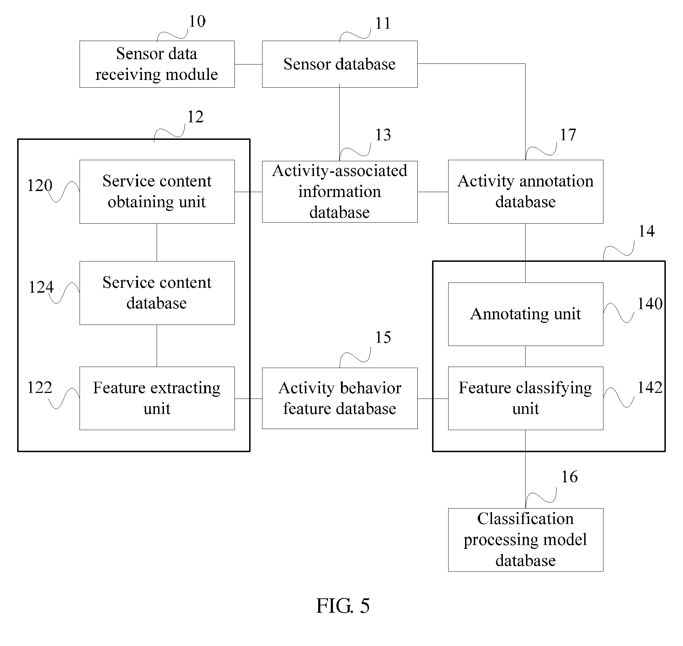

On the basis of FIG. 5, FIG. 5 is a schematic structural diagram of Embodiment 3 of a server according to the present invention. The following describes a technical solution of Embodiment 3 of the server according to the present invention in detail with reference to FIG. 4 and by using an example.

It is assumed that a user walks in a time period of 8:30 to 10:00. In this case, a sensor on a mobile terminal of the user records the location data and acceleration data of the user. Optionally, the sensor may collect data according to multiple collection solutions, for example, collect data at different time intervals in different operation modes of the mobile terminal. Then, the sensor data receiving module 10 on the server stores identification information, sensor data and data collection time information of the user terminal, which are collected by the sensor, into a sensor database 11 on the server, and stores the identification information and the data collection time information of the user terminal into an activity-associated information database 13 on the server.

A service content obtaining unit 120 of an application service obtaining module 12 on the server extracts, according to the identification information and the data collection time information of the user terminal in the activity-associated information database 13, application service content information published by the same user in the same time period by using the mobile terminal. For example, the service content obtaining unit 120 extracts the application service content information of "I am walking" that is published at 9:30 on a microblog by a user by using a mobile terminal, and stores the extracted application service content information "I am walking" to a service content database 124 in the application service obtaining module 12. Optionally, the service content database 124 may be independently arranged in the server. Then, a feature extracting unit 122 in the application service obtaining module 12 is used to extract a user activity behavior feature of the application service content information "I am walking", where "walking" is extracted and obtained, and then store the user activity behavior feature "walking" into an activity behavior feature database 15 on the server.

A feature classifying unit 140 in an annotating module 14 extracts the user activity behavior feature "walking" in the activity behavior feature database 15, and classifies "walking" according to a classification processing model provided by the classification processing model database 16 in the server. It should be noted that an example where a user is walking is used herein; when the user publishes a large amount of application service content information, a user activity behavior feature in the application service content information is classified by the feature classifying unit and the classification processing module database 16 in the server in cooperation with each other, and the classified user activity behavior feature "walking" is sent to the annotating unit 142. In this case, the annotating unit 142 annotates "walking" and some user activity behavior features, for example, "running" and "swimming", which are published by the user in other time periods and classified into the same category, as "sport". The whole annotating process may be performed by the operator, or may be performed by matching processing by presetting a knowledge repository in the server. The specific method and process thereof are described in detail in Embodiment 2 of the man-machine interaction data processing method according to the present invention, and will not be described herein again. The annotated user activity behavior feature "sport" is stored into an activity annotation database 17, and the annotated user activity behavior feature in the activity annotation database 17 is corresponded to the sensor data in the sensor database 11 according to the identification information and the data collection time information of the user terminal in the activity-associated information database 13.

Persons of ordinary skill in the art may understand that, all or a part of the steps in each of the foregoing method embodiments may be implemented by a program instructing relevant hardware. The aforementioned program may be stored in a computer readable storage medium. When the program runs, the steps of the foregoing method embodiments are performed. The foregoing storage medium includes any medium capable of storing program codes, such as a ROM, a RAM, a magnetic disk, or an optical disk.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as such modifications or replacements do not cause the essence of corresponding technical solutions to depart from the scope of the technical solutions of the embodiments of the present invention.

## Claims

1. A man-machine interaction data processing method, the method being performed by a server,
comprising:
receiving (S100,S200) data collection information sent by a user terminal, wherein the data collection information comprises identification information, sensor data, and data collection time information of the user terminal;
obtaining (S102) application service content information corresponding to the identification information and the data collection time information, and extracting (S104) a user activity behavior feature from the application service content information; and
annotating (S106) the sensor data according to the user activity behavior feature of the user terminal;
wherein the obtaining (S102) application service content information corresponding to the identification information and the data collection time information comprises: obtaining (S202) service content information of an application used by the user terminal corresponding to the identification information in a time period corresponding to the data collection time information; wherein the data collection time information identifies a time period in which the sensor data is collected;
wherein the extracting (S104) a user activity behavior feature from the application service content information comprises: extracting (S204) the user activity behavior feature from at least one category of information of link information and image information in the service content information of the application used by the user terminal.

2. The method according to claim 1, wherein the annotating the sensor data according to the user activity behavior feature of the user terminal comprises:
classifying (S206) the user activity behavior feature of the user terminal; and
annotating (S208) the sensor data by using the classified user activity behavior feature.

3. The method according to claim 1, wherein the application comprises:
at least one application of a social sharing application, and an online comment application.

4. A server, comprising:
a sensor data receiving module (10), configured to receive data collection information sent by a user terminal, wherein the data collection information comprises identification information, sensor data, and data collection time information of the user terminal;
an application service obtaining module (12), configured to obtain application service content information corresponding to the identification information and the data collection time information, and extract a user activity behavior feature from the application service content information; and
an annotating module (14), configured to annotate the sensor data according to the user activity behavior feature of the user terminal;
wherein the application service obtaining module comprises:
a service content obtaining unit (120), configured to obtain service content information of an application used by the user terminal corresponding to the identification information in a time period corresponding to the data collection time information; wherein the data collection time information identifies a time period in which the sensor data is collected; and
a feature extracting unit (122), configured to extract the user activity behavior feature from at least one category of information of link information and image information in the service content information of the application used by the user terminal.

5. The server according to claim 4, wherein the annotating module comprises:
a feature classifying unit (142), configured to classify the user activity behavior feature of the user terminal; and
an annotating unit (140), configured to annotate the sensor data by using the classified user activity behavior feature.

6. The server according to claim 4, wherein the application comprises:
at least one application of a social sharing application and an online comment application.

7. The server according to claim 5, wherein the application comprises:
at least one application of a social sharing application and an online comment application.

## Patentansprüche

1. Datenverarbeitungsverfahren mit Mensch-Maschine-Interaktion, wobei das Verfahren von einem Server ausgeführt wird,
umfassend:
Empfangen (S100, S200) von Datenerfassungsinformationen, die von einem Benutzerendgerät gesendet werden, wobei die Datenerfassungsinformationen Identifizierungsinformationen, Sensordaten und Zeitinformationen der Datenerfassung des Benutzerendgeräts umfassen;
Erhalten (S102) von Inhaltsinformationen eines Anwendungsdienstes, die den Identifizierungsinformationen und den Zeitinformationen der Datenerfassung entsprechen, und Extrahieren (S104) eines Verhaltensmerkmals einer Benutzeraktivität aus den Inhaltsinformationen des Anwendungsdienstes; und
Aufzeichnen (S 106) der Sensordaten gemäß dem Verhaltensmerkmal der Benutzeraktivität des Benutzerendgeräts;
wobei das Erhalten (S 102) der Inhaltsinformationen des Anwendungsdienstes, die den Identifizierungsinformationen und den Zeitinformationen der Datenerfassung entsprechen, umfasst: Erhalten (S202) von Dienstinhaltsinformationen einer Anwendung, die von dem Benutzerendgerät verwendet wird, das den Identifizierungsinformationen in einem Zeitraum entspricht, der den Zeitinformationen der Datenerfassung entspricht; wobei die Zeitinformationen der Datenerfassung einen Zeitraum identifizieren, in dem die Sensordaten erfasst werden;
wobei das Extrahieren (S104) eines Verhaltensmerkmals einer Benutzeraktivität aus den Inhaltsinformationen des Anwendungsdienstes umfasst: Extrahieren (S204) des Verhaltensmerkmals der Benutzeraktivität aus mindestens einer Informationskategorie von Link-Informationen und Bildinformationen in den Dienstinhaltsinformationen der Anwendung, die von dem Benutzerendgerät verwendet wird.

2. Verfahren nach Anspruch 1, wobei das Aufzeichnen der Sensordaten gemäß dem Verhaltensmerkmal der Benutzeraktivität des Benutzerendgeräts umfasst:
Klassifizieren (S206) des Verhaltensmerkmals der Benutzeraktivität des Benutzerendgeräts; und
Aufzeichnen (S208) der Sensordaten, indem das klassifizierte Verhaltensmerkmal der Benutzeraktivität verwendet wird.

3. Verfahren nach Anspruch 1, wobei die Anwendung umfasst:
mindestens eine Anwendung einer sozialen Verbreitungsanwendung und einer Online-Kommentaranwendung.

4. Server, umfassend:
ein Empfangsmodul für Sensordaten (10), das konfiguriert ist, Datenerfassungsinformationen zu empfangen, die von einem Benutzerendgerät gesendet werden, wobei die Datenerfassungsinformationen Identifizierungsinformationen, Sensordaten und Zeitinformationen der Datenerfassung des Benutzerendgeräts umfassen;
ein Modul zum Erhalten eines Anwendungsdienstes (12), das konfiguriert ist, Inhaltsinformationen eines Anwendungsdienstes zu erhalten, die den Identifizierungsinformationen und den Zeitinformationen der Datenerfassung entsprechen, und ein Verhaltensmerkmal einer Benutzeraktivität aus den Inhaltsinformationen des Anwendungsdienstes zu extrahieren; und
ein Aufzeichnungsmodul (14), das konfiguriert ist, die Sensordaten gemäß dem Verhaltensmerkmal der Benutzeraktivität des Benutzerendgeräts aufzuzeichnen;
wobei das Modul zum Erhalten eines Anwendungsdienstes umfasst:
eine Einheit zum Erhalten eines Dienstinhalts (120), die konfiguriert ist, Dienstinhaltsinformationen einer Anwendung zu erhalten, die von dem Benutzerendgerät verwendet wird, das den Identifizierungsinformationen in einem Zeitraum entspricht, der den Zeitinformationen der Datenerfassung entspricht; wobei die Zeitinformationen der Datenerfassung einen Zeitraum identifizieren, in dem die Sensordaten erfasst werden; und
eine Merkmalsextraktionseinheit (122), die konfiguriert ist, das Verhaltensmerkmal der Benutzeraktivität aus mindestens einer Informationskategorie von Link-Informationen und Bildinformationen in den Dienstinhaltsinformationen der Anwendung zu extrahieren, die von dem Benutzerendgerät verwendet wird.

5. Server nach Anspruch 4, wobei das Aufzeichnungsmodul umfasst:
eine Merkmalsklassifizierungseinheit (142), die konfiguriert ist, das Verhaltensmerkmal der Benutzeraktivität des Benutzerendgeräts zu klassifizieren; und
eine Aufzeichnungseinheit (140), die konfiguriert ist, die Sensordaten aufzuzeichnen, indem das klassifizierte Verhaltensmerkmal der Benutzeraktivität verwendet wird.

6. Server nach Anspruch 4, wobei die Anwendung umfasst:
mindestens eine Anwendung einer sozialen Verbreitungsanwendung und einer Online-Kommentaranwendung.

7. Server nach Anspruch 5, wobei die Anwendung umfasst: mindestens eine Anwendung einer sozialen Verbreitungsanwendung und einer Online-Kommentaranwendung.

## Revendications

1. Procédé de traitement de données d'interaction homme-machine, le procédé étant exécuté par un serveur, comprenant les étapes suivantes :
recevoir (S100, S200) des informations de collecte de données envoyées par un terminal d'utilisateur, où les informations de collecte de données comprennent des informations d'identification, des données de capteur, et des informations de temps de collecte de données du terminal d'utilisateur ;
obtenir (S102) des informations de contenu de service d'application correspondant aux informations d'identification et aux informations de temps de collecte de données, et extraire (S 104) une caractéristique de comportement d'activité d'utilisateur à partir des informations de contenu de service d'application ; et
annoter (S106) les données de capteur conformément à la caractéristique de comportement d'activité d'utilisateur du terminal d'utilisateur ;
où obtenir (S 102) des informations de contenu de service d'application correspondant aux informations d'identification et aux informations de temps de collecte de données comprend les étapes suivantes : obtenir (S202) des informations de contenu de service d'une application utilisée par le terminal d'utilisateur correspondant aux informations d'identification dans une période de temps correspondant aux informations de temps de collecte de données ; où les informations de temps de collecte de données identifient une période de temps dans laquelle les données de capteur sont collectées ;
où extraire (S104) une caractéristique de comportement d'activité d'utilisateur à partir des informations de contenu de service d'application comprend l'étape suivante : extraire (S204) la caractéristique de comportement d'activité d'utilisateur de l'au moins une catégorie d'informations d'informations de lien et d'informations d'image dans les informations de contenu de service de l'application utilisée par le terminal d'utilisateur.

2. Procédé selon la revendication 1, dans lequel annoter les données de capteur conformément à la caractéristique de comportement d'activité d'utilisateur du terminal d'utilisateur comprend les étapes suivantes :
classifier (S206) la caractéristique de comportement d'activité d'utilisateur du terminal d'utilisateur ; et
annoter (S208) les données de capteur en utilisant la caractéristique de comportement d'activité d'utilisateur classifiée.

3. Procédé selon la revendication 1, dans lequel l'application comprend :
au moins une application d'une application de partage social, et une application de commentaire en ligne.

4. Serveur comprenant :
un module de réception de données de capteur (10), configuré pour recevoir des informations de collecte de données envoyées par un terminal d'utilisateur, où les informations de collecte de données comprennent des informations d'identification,
des données de capteur, et des informations de temps de collecte de données du terminal d'utilisateur ;
un module d'obtention de service d'application (12), configuré pour obtenir des informations de contenu de service d'application correspondant aux informations d'identification et aux informations de temps de collecte de données, et extraire une caractéristique de comportement d'activité d'utilisateur à partir des informations de contenu de service d'application ; et
un module d'annotation (14), configuré pour annoter les données de capteur conformément à la caractéristique de comportement d'activité d'utilisateur du terminal d'utilisateur ;
où le module d'obtention de service d'application comprend :
une unité d'obtention de contenu de service (120), configurée pour obtenir des informations de contenu de service d'une application utilisée par le terminal d'utilisateur correspondant aux informations d'identification dans une période de temps correspondant aux informations de temps de collecte de données ; où les informations de temps de collecte de données identifient une période de temps dans laquelle les données de capteur sont collectées ; et
une unité d'extraction de caractéristique (122), configurée pour extraire la caractéristique de comportement d'activité d'utilisateur à partir d'au moins une catégorie d'informations d'informations de lien et d'informations d'image dans les informations de contenu de service de l'application utilisée par le terminal d'utilisateur.

5. Serveur selon la revendication 4, dans lequel le module d'annotation comprend :
une unité de classification de caractéristique (142), configurée pour classifier la caractéristique de comportement d'activité d'utilisateur du terminal d'utilisateur ; et
une unité d'annotation (140), configurée pour annoter les données de capteur en utilisant la caractéristique de comportement d'activité d'utilisateur classifiée.

6. Serveur selon la revendication 4, dans lequel l'application comprend :
au moins une application d'une application de partage social et d'une application de commentaire en ligne.

7. Serveur selon la revendication 5, dans lequel l'application comprend :
au moins une application d'une application de partage social et d'une application de commentaire en ligne.
